# FASCICULE DE BREVET EUROPEEN

(11) **EP 0 739 584 B1**
(45) Date de publication et mention de la délivrance du brevet: **30.06.1999**
(21) Numéro de dépôt: 96440033.7
(22) Date de dépôt: 25.04.1996
(51) Int. Cl.: A01J 25/00

(54) **Processus et appareillage pour l'obtention semi-industrielle de fromages de très haute qualité**
Verfahren und Vorrichtung zum Herstellen von hochqualitativem Käse auf halbindustrieller Basis
Process and installation for semi-industrial making of very high quality cheese

(30) Priorité: 28.04.1995 FR 9505307
(43) Date de publication de la demande: 30.10.1996
(73) Titulaire: Haxaire, Jacques, 68650 Lapoutroie (FR)
(72) Inventeur: Haxaire, Jacques, 68650 Lapoutroie (FR)
(74) Mandataire: Littolff, Denis

(56) Documents cités:
- EP-A- 0 551 239

## Description

La présente invention concerne un processus et un appareillage visant l'obtention par voie semi-industrielle de fromages de très haute qualité, bénéficiant de propriétés physiques, biologiques et organoleptiques que ne possédaient jusqu'ici que ceux de ces fromages qui, étant obtenus par un processus artisanal, bénéficiaient de l'appellation "fermiers".

Ce processus et cet appareillage sont d'application très générale et peuvent être adaptés, dans le cadre de l'invention, à toutes les familles fromagères, à l'exception des fromages à pâte fondue. Ainsi, selon l'invention on pourra traiter par le processus et au moyen de l'appareillage décrits ci-après :
- Les fromages dits "frais" tels que le Brillat savarin,
- Les fromages à pâte molle et à croûte lavée, tels que le Munster Géromé, à croûte fleurie, tels que le Camembert ou le Brie de Meaux ou à croûte persillée, tels que le Roquefort ou la Fourme d'Ambert,
- Les fromages à pâte pressée non cuite, tels que le Cantal, le Saint Nectaire, le Reblochon, la Tomme de Savoie, et
- Les fromages à pâte pressée cuite, tels que le Comté.

L'origine des laits utilisés n'est pas limitée au lait de vache, mais peut être du lait de chèvre, tel que le Sainte Maure ou le Crottin de Chavignol, ou du lait de brebis, tel que le Roquefort.

Il doit être bien entendu que l'énumération ci-dessus n'est donnée qu'à titre d'exemples des différentes catégories de productions fromagères, en se référant à des fromages d'appellations d'origine contrôlée en France, ce qui garantit leur identification, mais que l'invention s'applique aux fromages appartenant aux mêmes catégories et produits dans tout autre pays.

Si l'on considère ainsi, à titre d'exemple, le fromage dit "munster", on sait qu'il est fabriqué en France, en Allemagne et en Irlande. Par ailleurs, on sait qu'il en existe de nombreuses marques sur le marché, dont une majorité est obtenue par des processus industriels, ou semi-industriels, qui leur font perdre une proportion importante de leurs qualités organoleptiques. Seule est considérée comme bénéficiant de l'appellation "fermier", la variété possédant les qualités qui ne peuvent être obtenues que par un processus artisanal.

On va donc décrire en détail l'invention dans son application au cas particulier du "Munster Géromé", c'est à dire l'invention qui, dans ledit cas particulier, permet l'obtention par un nouveau processus semi-industriel de fromages dits "Munster Géromé" de très haute qualité, bien qu'à une échelle semi-industrielle, et bénéficiant de propriétés que ne possédaient jusqu'à présent que ceux de ces fromages dits "fermiers", obtenus par un processus artisanal.

On rappellera brièvement ici que, le processus de fabrication du Munster étant bien connu dans son principe, la distinction faite entre la qualité "fermier" et les autres productions à caractère industriel repose sur le fait que le Munster "fermier" est produit sur le lieu même de récolte du lait, ce qui a pour double conséquence que le lait utilisé provient d'une source unique et qu'il ne subit aucune altération résultant de son transport et des ses manipulations, tandis que pour la production de fromage par voie industrielle, le lait utilisé résulte de la réunion de plusieurs récoltes chez des producteurs différents, et le processus de fabrication, tout en respectant bien entendu les normes d'hygiène, comporte de nombreuses manipulations portant atteinte aux propriétés "fines" de chaque lait individuel, ce qui conduit à des produits de qualité standard mais inférieure.

La déposante a recherché les moyens de réaliser, à une échelle de grandeur semi-industrielle, un processus conforme à la fabrication du fromage "fermier", c'est à dire dont chacun conserve les qualités propres du lait dont il est issu.

Ces moyens portent à la fois sur le traitement subi par le lait et sur le matériel utilisé au cours des diverses étapes de ce traitement.

Dans un premier temps, on va donc énumérer les particularités des traitements subis par le lait, par comparaison avec les étapes correspondantes du processus industriel usuel.

La première idée de départ est, partant d'un lait récolté chez un producteur déterminé, de conserver à ce lait ses qualités propres, tout en y favorisant le développement des bactéries lactiques qu'il contient et qui lui confèrent son goût propre, et en y conservant intactes les particules fragiles qu'il contient, à savoir par exemple les globules gras et les micelles de caséine.

A cet effet, alors que dans les processus industriels, on procède chez des producteurs groupés en coopératives, à une collecte du lait dans les 24 à 60 heures, et généralement 48 heures suivant la traite, et on conserve le mélange des laits à 4° C, au contraire, selon le processus de l'invention, on procède à une collecte chez un producteur unique dans les 12 heures et on conserve le lait à une température comprise dans l'intervalle des 4 à 16° C au moins, ce qui favorise le développement des ferments et bactéries propres au site d'élevage, qui sont fonction de la nourriture naturelle des vaches.

Ensuite, au lieu que, selon le processus industriel classique, tous les laits réunis, et transportés ensemble mélangés dans une citerne unique, sont transférés ensemble par pompage dans une cuve unique, traitement provoquant inévitablement une lipolyse, c'est à dire une destruction des globules gras, au contraire, selon l'invention, après transport de chaque lait collecté chez chaque producteur dans des compartiments séparés d'un camion citerne à suspension sur coussins d'air, chaque lait est déversé séparément et par gravité directement dans des bassines d'emprésurage

Selon une troisième considération, on procède à l'opération d'emprésurage, au moyen d'une présure classique, garantissant le droit à l'Appellation d'Origine Contrôlée. Toutefois, alors que dans le processus industriel habituel, on emprésure le lait réparti dans une série de bassines dans un ordre donné, on attend un temps déterminé et on décaille dans le même ordre, puisque le lait ainsi traité est en réalité un mélange qui est donc le même dans toutes les bassines, au contraire, selon l'invention, chaque bassine recevant un lait différent, on la porte à la température optimale de développement des flores mesophiles (approximativement 25 à 38° C), de manière à ce qu'il demeure "cru", les bactéries n'étant pas détruites. Dans le cas des pâtes pressées cuites, cette température doit être portée à la température optimale de développement des flores thermophiles (approximativement 40 à 50° C). On procède alors à l'emprésurage et au décaillage dans un ordre qui est fonction du comportement propre à chaque lait, identifié par son origine et sa composition, à savoir notamment sa flore bactérienne et son acidité.

De préférence, chaque bassine est équipée d'un couvercle, de préférence en bois, ce qui permet de conserver une température homogène au lait qui y est contenu.

La quatrième opération étant habituellement le moulage, par déversement du caillé dans des moules, et élimination du sérum par aspiration à travers un tamis jusqu'à un niveau déterminé, avec retournement en cours d'égouttage, au contraire selon l'invention, le caillé est transposé par écoulement par des couloirs séparés vers des bassines depuis lesquelles une fraction du sérum qui est restée dans les couloirs facilite ensuite le glissement du caillé après division et séparation vers les moules d'égouttage individuels, ou groupés en blocs-moules destinés à être retournés à l'état empilé ensemble.

Pour tenir compte des différences entre les laits contenus dans les différents blocs-moules, différences résultant de leurs origines, de leur acidité, de la flore développée, l'égouttage est pratiqué, soit à basse température (inférieure à 18° C environ) s'ils ont déjà l'acidité appropriée, soit à température relativement plus élevée (18-24° C) dans le cas contraire, la température étant ramenée progressivement au-dessous de 18° C dès que l'acidité souhaitée est atteinte.

L'acidité est mesurée sur le sérum qui s'égoutte, par un procédé classique d'évaluation de l'acidité lactique, au moyen d'un pH-mètre ou d'un acidimètre.

D'un bout à l'autre de ce processus, toutes les précautions sont donc prises, au niveau des modalités de traitement, pour respecter l'individualité et l'intégrité de chaque lait. Au surplus, ce processus permet de suivre à chaque instant le traitement de chaque lait, ou plus exactement de connaître l'origine de chaque lait subissant un traitement déterminé et de le suivre "à la trace" du début jusqu'à la fin de tout le processus. Cette "traçabilité" du lait est un élément déterminant de l'invention, tant du point de vue de la nouveauté, car cette caractéristique d'identification permanente de chaque lait au cours de tout le processus n'avait jamais été imaginée jusqu'à présent, qu'au point de vue de l'activité inventive, car cette caractéristique permet, à partir de chaque lait individuel, de créer un "cru" particulier du fromage considéré, avec toutes les qualités propres à ce "cru".

Dans le même but, l'appareillage comporte selon l'invention des aménagements visant tous à éviter de soumettre le lait à des contraintes physiques et mécaniques qui le fragiliseraient, telles que des chocs, des surpressions et analogues.

A cet effet, tous les éléments participant à la circulation du lait et du caillé sont sur-dimensionnés, c'est à dire de plus grandes dimensions et capacités qu'il ne serait nécessaire ; c'est ainsi le cas pour les tubes, vannes et pompes, prévus pour la circulation du lait, et son chauffage, et le cheminement du caillé et du sérum, sont de plus gros diamètre et à plus gros débit qu'il ne serait normalement nécessaire pour éviter tout accroissement du pression. De même, on élimine tout coude aigu sur ces mêmes éléments, et notamment le passage du caillé depuis les bassines d'emprésurages aux blocs-moules se fait par simple glissement par gravité le long de la paroi courbe des couloirs et non par chute comme dans les appareillages connus. De même encore, lesdites bassines sont munies de roulettes pour se déplacer le long de rails lisses, c'est à dire sans joints au lieu d'être traînées sur un carrelage plus ou moins irrégulier, comme dans les appareils connus, l'ensemble de ces précautions ayant pour but d'éviter toute secousse et tout choc pour le caillé.

Ayant décrit l'invention dans son application au cas particulier du "Munster géromé", il doit être bien entendu comme indiqué au préambule que ladite invention n'est pas limitée à ce cas particulier, décrit à titre purement illustratif, mais qu'elle couvre l'application à n'importe quel fromage (excepté les fromages à pâte fondue), obtenu à partir de lait de bovins, d'ovins, de caprins, quelle que soit son origine géographique dans tous les territoires couverts par le présent brevet.

Il est bien connu que les produits agro-alimentaires de toutes sortes possèdent, selon la saison ou leur origine géographique, des qualités organoleptiques différentes. Ainsi sont connus l'agneau dit "de pré-salé" ou le "miel d'acacia", de bruyère ou d'autres fleurs. On a même déjà utilisé cette particularité comme argument publicitaire pour la promotion d'une marque de fromage dite "de printemps". Par contre, une telle distinction, subordonnée à des paramètres multiples tels que la flore spécifique à un "micro-terroir", n'a jamais été utilisée en vue de l'obtention de véritables "crus" de fromages définis, chacun, en fonction d'un lait d'origine unique, c'est à dire possédant des qualités définies et reproductibles, connues à l'avance, cette obtention étant rendue possible, selon l'invention, grâce aux précautions permettant de préserver l'intégrité des propriétés de chaque lait individuel, et à la "traçabilité" de chaque lait tout au long de son traitement.

## Revendications

1. Processus pour l'obtention, à l'échelle semi-industrielle, d'un fromage bénéficiant des qualités des produits dits "fermiers", procédé du type comportant les étapes usuelles de :
- collecte individuelle du lait chez les producteurs,
- transport de ce lait à l'atelier de fabrication,
- transfert de ce lait dans une cuve,
- transfert et emprésurage de ce lait dans des bassines mobiles,
- transfert, division, séparation et moulage du caillé dans des moules individuels ou groupés en blocs,
- égouttage dudit caillé,
caractérisé en ce que, dans le but de préserver, dans le produit final, les qualités physiques, biologiques et organoleptiques spécifiques résultant du milieu naturel de chaque lait livré par chaque producteur, et liées notamment à la flore bactérienne correspondante,
- ledit lait est collecté séparément chez chaque producteur, au plus tard dans les 12 heures suivant la traite, et conservé à une température comprise dans l'intervalle de 4 à 16° C au moins jusqu'à son arrivée à l'atelier de fabrication ;
- ledit transport audit atelier est réalisé, pour chaque lait collecté, dans un compartiment séparé d'un camion citerne à suspension sur coussins d'air, ledit lait étant, dès l'arrivée à l'atelier de fabrication, transféré par simple gravité directement dans des bassines individuelles d'emprésurage, où il est porté à la température optimale de développement des flores qu'il contient, et emprésuré au moyen d'une présure classique pendant une durée déterminée par la composition et les propriétés dudit contenu, à savoir notamment sa flore bactérienne et son acidité, lesdites bassines étant équipées de couvercles, de préférence en bois, en vue du maintien à une température homogène du lait qu'elles contiennent ;
- et le caillé formé dans ces bassines est transféré, après élimination par aspiration à travers un tamis d'une fraction de l'ordre de 30% du sérum, dans des groupes ou blocs de moules où il subit un égouttage avec retournements éventuels, soit à une température inférieure à 18° C s'il présente le degré approprié d'acidité, soit à 18-24° C environ dans le cas contraire.

2. Processus selon la revendication 1, caractérisé en ce que la température à laquelle le lait est porté en vue de l'opération d'emprésurage-caillage, est comprise entre 25 et 38° C pour les pâtes molles contenant des flores mésophiles et entre 40 et 50° C pour les pâtes pressées cuites contenant des flores thermophiles.

3. Processus selon les revendications 1 et 2, caractérisé en ce que, dans le but d'éviter au lait de subir des contraintes qui fragiliseraient ses constituants tels que les globules gras ou les micelles de caséine, tous les organes participant à la circulation du lait ou du caillé, tels que tubes, tuyauteries, vannes, pompes et analogues, sont surdimensionnés, ne présentant aucune fraction de trajet comportant un changement brusque de direction, et ne comportent aucune fraction de trajet donnant lieu à choc ou agression physique d'aucune sorte.

4. Processus selon la revendication 3, caractérisé en ce que, notamment, le trajet des bassines d'emprésurage se fait par roulement sur des rails sans joints et le passage des bassines d'emprésurage aux moules se fait par glissement le long de couloirs inclinés arrondis, ce glissement étant facilité par la présence du résidu de sérum avant égouttage.

5. Processus selon l'une quelconque des revendications 1 à 4, caractérisé en ce que ce processus est destiné à l'obtention d'un fromage choisi dans le groupe constitué par les fromages obtenus à partir de lait bovin, ovin ou caprin, et appartenant aux familles suivantes :
- Les fromages dits "frais" tels que le Brillat savarin,
- Les fromages à pâte molle et à croûte lavée, tels que le Munster, à croûte fleurie, tels que le Camembert ou le Brie de Meaux ou à croûte persillée, tels que le Roquefort ou la Fourme d'Ambert,
- Les fromages à pâte pressée non cuite, tels que le Cantal, le Saint Nectaire, le Reblochon, la Tomme de Savoie, et
- Les fromages à pâte pressée cuite, tels que le Comté.

6. Appareillage pour la mise en oeuvre du processus selon l'une quelconque des revendications 1 à 5, caractérisé en ce qu'il comporte :
- des moyens pour collecter le lait séparément chez chaque producteur, au plus tard dans les 12 heures suivant la traite, et conservé à une température comprise dans l'intervalle de 4 à 16° C au moins jusqu'à son arrivée à l'atelier de fabrication ;
- des moyens pour transporter à l'atelier de fabrication chaque lait collecté, dans un compartiment séparé d'un camion citerne à suspension sur coussins d'air, ledit lait étant, à l'arrivée à l'atelier de fabrication, transféré par simple gravité depuis chaque compartiment directement dans des bassines d'emprésurage spécifiques, où il est porté à la température optimale des flores qu'il contient, et emprésuré au moyen d'une présure classique pendant une durée déterminée par la composition et les propriétés dudit contenu, à savoir notamment sa flore bactérienne et son acidité, ces bassines étant équipées de couvercles, de préférence en bois ;
- et des moyens pour transférer le caillé formé dans ces bassines, après élimination par aspiration à travers un tamis d'une fraction de l'ordre de 30% du sérum, dans des moules ou groupes de moules où il subit un égouttage avec retournements éventuels, soit à une température inférieure à 18° C environ s'il présente le degré approprié d'acidité, soit à 18-24° C dans le cas contraire.

7. Appareillage selon la revendication 6, caractérisé en ce que, tous les organes participant à la circulation du lait ou du caillé, tels que tubes, tuyauteries, vannes, pompes et analogues, sont surdimensionnés, ne présentant aucune fraction de trajet comportant un changement brusque de direction, et ne comportent aucune fraction de trajet donnant lieu à choc ou agression physique d'aucune sorte.

8. Appareillage selon la revendication 7, caractérisé en ce que, notamment, le trajet des bassines d'emprésurage se fait par roulement sur des rails sans joints et le passage des bassines d'emprésurage aux moules se fait par glissement le long de couloirs inclinés arrondis.

## Claims

1. Process for obtaining, on a semi-industrial scale, a cheese having the advantage of the qualities of "farm" products, which process is of the type including the usual steps of:
• individual collection of the milk from the producers,
• transport of this milk to the creamery,
• transfer of this milk into a vat,
• transfer and treatment with rennet of this milk in mobile vats,
• transfer, division, separation and moulding of the curd in individual moulds or moulds grouped into blocks,
• draining of the said curd,
characterised by the fact that, in order to retain, in the final product, specific physical, biological and organoleptic qualities resulting from the natural medium of each milk provided by each producer, and linked in particular to the corresponding bacterial flora,
• the said milk is collected separately from each producer, at the latest within 12 hours following milking, and preserved at a temperature within the range of 4 to 16°C at least until its arrival at the creamery;
• the said transport to the said creamery takes place, for each milk collected, in a separate compartment of a road tanker with air-cushioned suspension, the said milk being transferred, from its arrival at the creamery, by gravity alone, directly into the individual rennet treatment vats, in which it is brought to the optimum temperature for development of the flora which it contains, and treated with rennet using a conventional rennet for a period determined by the composition and the properties of the said content, i.e. in particular its bacterial flora and its acidity, the said vats being equipped with covers, preferably made of wood, in order to keep the milk which they contain at an homogeneous temperature;
• and the curd formed in these vats is transferred, after elimination by aspiration through a strainer of a fraction of the order of 30% of the whey, into groups or blocks of moulds in which it is subjected to draining, and optionally turned, either at a temperature lower than 18°C if it has the suitable degree of acidity, or at approximately 18 - 24°C in the contrary case.

2. Process as described in claim 1, characterised by the fact that the temperature to which the milk is brought for the rennet treatment - curd formation operation, is between 25 and 38°C for soft cheeses containing mesophilic floras and between 40 and 50°C for cooked pressed cheeses containing thermophilic floras.

3. Process as described in claims 1 and 2, characterised by the fact that in order to avoid the milk being subjected to stresses which would render its constituents such as the fat globules or the casein micella fragile, all the organs involved in the circulation of the milk or curd, such as pipes, pipework and fittings, valves, pumps and the like, are over-sized, having no passage section which includes a sharp change of direction and including no passage section giving rise to any sort of shock or physical attack.

4. Process as described in claim 3, characterised by the fact that, in particular, the passage of the rennet treatment vats is effected by running on jointless rails and the passage of the rennet treatment vats to the moulds takes place by sliding along rounded inclined channels, this sliding being facilitated by the presence of the whey residue before drainage.

5. Process as described in any one of claims 1 to 4, characterised by the fact that this process is intended for the production of a cheese selected from the group formed by the cheeses obtained from bovine, ovine, or caprine milk and belonging to the following families:
• Cheeses known as "fresh" such as Brillat Savarin,
• Soft cheeses and washed rind cheeses, such as Munster, bloomy rind cheeses such as Camembert or Brie de Meaux, or blue rind cheeses such as Roquefort or Fourme d'Ambert,
• Uncooked pressed cheeses, such as Cantal, Saint Nectaire, Reblochon and Tomme de Savoie, and
• Cooked pressed cheeses, such as Comté.

6. Apparatus for performing the process as described in any one of claims 1 to 5, characterised by the fact that it includes:
• means for collecting the milk separately from each producer, at the latest within 12 hours following milking, and preserved at a temperature within the range of 4 to 16°C at least until it arrives at the creamery;
• means for transporting each milk collected to the creamery, in a separate compartment of a road tanker having air-cushioned suspension, the said milk being transferred, on arrival at the creamery, by gravity alone directly into the specific rennet treatment vats, in which it is brought to the optimum temperature for the floras which it contains, and treated with rennet using a conventional rennet for a period determined by the composition and the properties of the said content, i.e. in particular its bacterial flora and its acidity, these vats being equipped with covers, preferably made of wood;
• and means for transferring the curd formed in these vats, after elimination by aspiration through a strainer of a fraction of the order of 30% of the whey, into groups or blocks of moulds in which it is subjected to draining, and optionally turned, either at a temperature lower than 18°C if it has the suitable degree of acidity, or at approximately 18 - 24°C in the contrary case.

7. Apparatus as described in claim 6, characterised by the fact that all the organs involved in the circulation of the milk or curd, such as pipes, pipework and fittings, valves, pumps and the like, are over-sized, having no passage section which includes a sharp change of direction and including no passage section giving rise to any sort of shock or physical attack.

8. Apparatus as described in claim 7, characterised by the fact that, in particular, the passage of the rennet treatment vats is effected by running on jointless rails and the passage of the rennet treatment vats to the moulds takes place by sliding along rounded inclined channels.

## Patentansprüche

1. Verfahren zum Gewinnen eines Käses im halbindustriellen Maßstab, der Qualitäten von sogenannten "Landprodukten" besitzt, wobei das Verfahren von dem Typ ist, der die folgenden üblichen Schritte enthält:
- einzelnes Einsammeln der Milch bei den Erzeugern,
- Transportieren dieser Milch zum Herstellungswerk,
- Umladen dieser Milch in einen Bottich,
- Umladen dieser Milch in bewegliche Becken und Labzusetzung zu dieser Milch,
- Umladen, Teilen, Trennen und Gießen der geronnenen Milch in einzelne oder zu Blöcken gruppierte Gießformen,
- Entwässern der geronnenen Milch,
**dadurch gekennzeichnet**, daß zur Beibehaltung der besonderen physischen, biologischen und organoleptischen Qualitäten im Endprodukt, die sich aus dem natürlichen Milieu jeder von jedem Erzeuger gelieferten Milch ergeben und insbesondere mit der entsprechenden Bakterienflora in Beziehung stehen,
- die Milch spätestens während der dem Melken folgenden 12 Stunden getrennt bei jedem Erzeuger gesammelt wird und mindestens bis zur Ankunft im Herstellungswerk bei einer Temperatur aufbewahrt wird, die im Intervall von 4-16 °C liegt,;
- der Transport zum Werk für jede gesammelte Milch in einem getrennten Abteil eines Tanklastwagens mit Luftfederung erfolgt, wobei die Milch bei ihrer Ankunft im Herstellungswerk einfach durch Schwerkraft direkt in einzelne Labzusetzungsbecken umgeladen wird, wo sie auf der optimalen Temperatur für die Entwicklung der Flora, die sie enthält, gehalten wird, und mittels eines herkömmlichen Labferments während einer durch die Zusammensetzung und die Eigenschaften des Inhalts, d. h. insbesondere durch die Bakterienflora und ihren Säuregehalt, bestimmten Dauer zur Gerinnung gebracht wird, wobei die Becken mit Deckeln, zweckmäßig aus Holz, versehen sind, um die Milch, die sie enthalten auf einer gleichmäßigen Temperatur zu halten;
- die geronnene Mich, die in diesen Becken gebildet wird, nach Beseitigung eines Anteils in der Größenordnung von 30 % des Serums durch Absaugen durch ein Sieb in Gruppen oder Blöcke von Gießformen umgeladen wird, wo sie abtropft und eventuell auf eine Temperatur von weniger als 18 °C, wenn sie den geeigneten Säuregrad aufweist, oder von ungefähr 18-24 °C im entgegengesetzten Fall zurückkehrt.

2. Verfahren nach Anspruch 1, dadurch gekennzeichnet, daß die Temperatur, auf der die Milch für den Labzusetzungs- und Gerinnungsvorgang gehalten wird, im Bereich zwischen 25 und 38 °C für die Weichkäse, die eine mesophile Flora enthalten, und im Bereich zwischen 40 und 50 °C für die gekochten Käse, die eine thermophile Flora enthalten, enthalten ist.

3. Verfahren nach Anspruch 1 und 2, dadurch gekennzeichnet, daß, um zu vermeiden, daß die Milch Beanspruchungen unterworfen wird, die ihre Bestandteile wie etwa die Fettkörperchen oder die Kasein-Mizellen schwächen, sämtliche Elemente, die an der Zirkulation der Milch oder der geronnenen Milch teilhaben, etwa die Röhren, Rohrleitungen, Schieber, Pumpen und dergleichen, überdimensioniert sind und keinerlei Wegstrecke aufweisen, die eine plötzliche Richtungsänderung aufweisen, und keinerlei Wegstrecke enthalten, die Anlaß für einen Stoß oder eine physische Gewalteinwirkung irgendeiner Art geben.

4. Verfahren nach Anspruch 3, dadurch gekennzeichnet, daß insbesondere der Weg der Labzusetzungsbecken durch Rollen auf Schienen ohne Verbindungstellen verläuft und die Bewegung der Labzusetzungsbecken zu den Gießformen durch Gleiten längs abgerundeter geneigter Rutschen erfolgt, wobei dieses Gleiten durch das Vorhandensein des restlichen Serums vor dem Abtropfen erleichtert wird.

5. Verfahren nach irgendeinem der Ansprüche 1 bis 4, dadurch gekennzeichnet, daß dieses Verfahren für die Gewinnung eines Käses vorgesehen ist, der aus der Gruppe gewählt ist, die aus den Käsen gebildet ist, die aus Kuhmilch, Schafsmilch oder Ziegenmilch erhalten werden und zu den folgenden Familien gehören:
- die sogenannten "Frischkäse" wie etwa der Brillat Savarin,
- die Weichkäse mit gewaschener Rinde wie etwa der Münster, die Weichkäse mit blühender Rinde wie etwa der Camembert oder der Brie de Meaux oder die Weichkäse mit Edelpilzrinde wie etwa der Roquefort oder der Fourme d'Ambert,
- die ungekochten Preßkäse wie etwa der Cantal, der Saint Nectaire, der Reblochon, der Tomme de Savoie und
- die gekochten Preßkäse wie der Comté.

6. Vorrichtung für die Ausführung des Verfahrens nach irgendeinem der Ansprüche 1 bis 5, dadurch gekennzeichnet, daß sie enthält:
- Mittel zum getrennten Sammeln der Milch bei jedem Erzeuger spätestens während der 12 Stunden nach dem Melken, wobei die Milch wenigstens bis zu ihrer Ankunft im Herstellungswerk auf einer Temperatur gehalten wird, die im Intervall von 4 bis 16 °C liegt;
- Mittel zum Transportieren jeder gesammelten Milch zum Herstellungswerk in einem getrennten Abteil eines Tanklastwagens mit Luftfederung, wobei die Milch bei der Ankunft im Herstellerwerk einfach durch Schwerkraft von jedem Abteil direkt in spezifische Labzusetzungsbecken umgeladen wird, wo sie auf der optimalen Temperatur der Flora, die sie enthält, gehalten wird und mittels eines herkömmlichen Labferments während einer Dauer, die durch die Zusammensetzung und die Eigenschaften des Inhalts, d. h. insbesondere ihre Bakterienflora und ihren Säuregrad, bestimmt ist, zur Gerinnung gebracht wird, wobei diese Becken mit Deckeln, zweckmäßig aus Holz, versehen sind;
- und Mittel zum Umladen der in diesen Becken gebildeten geronnenen Milch nach Beseitigung eines Anteils in der Größenordnung von 30 % des Serums durch Absaugen durch ein Sieb in Gießformen oder Gruppen von Gießformen, wo sie abtropft und eventuell auf eine Temperatur von weniger als ungefähr 18 °C, wenn sie den geeigneten Säuregrad aufweist, oder auf 18-24 °C im entgegengesetzten Fall zurückkehrt.

7. Vorrichtung nach Anspruch 6, dadurch gekennzeichnet, daß sämtliche Elemente, die an der Zirkulation der Milch oder der geronnenen Milch teilhaben, etwa die Röhren, Rohrleitungen, Schieber, Pumpen und dergleichen, überdimensioniert sind und keinerlei Wegstrecke aufweisen, die eine plötzliche Richtungsänderung enthält, und keinerlei Wegstrecke aufweisen, die Anlaß zu Stößen oder physischer Gewalteinwirkung irgendeiner Art gibt.

8. Vorrichtung nach Anspruch 7, dadurch gekennzeichnet, daß insbesondere die Bahn der Labzusetzungsbecken durch Rollen auf Schienen ohne Verbindungen erfolgt und die Bewegung von den Labzusetzungsbecken zu den Gießformen durch Gleiten längs abgerundeter, geneigter Rutschen erfolgt.
